(19) Europäisches Patentamt
European Patent Office
Office européen des brevets

(11) **EP 2 873 744 A1**

(12) # EUROPEAN PATENT APPLICATION
published in accordance with Art. 153(4) EPC

(43) Date of publication:
**20.05.2015 Bulletin 2015/21**

(21) Application number: **13879416.9**

(22) Date of filing: **08.07.2013**

(51) Int Cl.:
*C22C 9/02* (2006.01)   *C01B 31/02* (2006.01)
*C22C 9/00* (2006.01)   *C22C 9/01* (2006.01)
*H01B 13/00* (2006.01)   *C22C 9/04* (2006.01)
*C22C 9/05* (2006.01)   *C22C 9/06* (2006.01)
*C22C 9/10* (2006.01)   *H01M 8/02* (2006.01)

(86) International application number:
**PCT/JP2013/068636**

(87) International publication number:
**WO 2014/027528 (20.02.2014 Gazette 2014/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.08.2012 JP 2012180590**

(71) Applicant: **JX Nippon Mining & Metals Corp.
Chiyoda-ku
Tokyo 100-8164 (JP)**

(72) Inventor: **CHIBA, Yoshihiro
Hitachi-shi
Ibaraki 317-0056 (JP)**

(74) Representative: **Prüfer & Partner GbR
European Patent Attorneys
Sohnckestraße 12
81479 München (DE)**

(54) **ROLLED COPPER FOIL FOR GRAPHENE PRODUCTION AND GRAPHENE PRODUCTION METHOD**

(57) A rolled rolled copper foil for producing graphene, wherein a ratio (IC/IA) of a maximum value of a detected intensity (IC) at $\alpha$ = 15 degrees and $\beta$ = 90 degrees $\pm$ 2 degrees and a maximum value of a detected intensity (IA) at $\alpha$ = 70 degrees and $\beta$ = 0 degree $\pm$ 2 degrees is less than 1, and a ratio (ID/IB) of a maximum value of a detected intensity (ID) at $\alpha$ = 15 degrees and $\beta$ = 270 degrees $\pm$ 2 degrees and a maximum value of a detected intensity (IB) at $\alpha$ = 70 degrees and $\beta$ = 180 degrees $\pm$ 2 degrees is less than 1, shown in {111} pole figure.

[Fig. 1]

**Description**

Field of the Invention

The present invention relates to a copper foil for producing graphene, and a method of producing graphene using the same.

Description of the Related Art

Graphite has a layered structure where a plurality of layers of carbon six-membered rings planarly arranged is laminated. The graphite having a mono atomic layer or around several atomic layers is called as graphene or a graphene sheet. The graphene sheet has own electrical, optical and mechanical properties, and in particularly has a high carrier mobility speed. Therefore, the graphene sheet has expected to be applied in various industries as a fuel cell separator, a transparent electrode, a conductive thin film for a display device, a "mercury-free" fluorescent lamp, a composite material, a carrier for Drug Delivery System (DDS) etc.

As a method of producing the graphene sheet, it is known that graphite is peeled with an adhesion tape. However, there are problems in that the number of the layer(s) of the graphene sheet obtained is not uniform, a wide area graphene sheet is difficult to be provided, and it is not suitable for mass production.

A technology has been developed that a sheet-like monocrystal graphitized metal catalyst is contacted with a carboneous substance and then is heat treated to grow the graphene sheet (Chemical Vapor Deposition (CVD) method) (Patent Literature 1). As the monocrystal graphitized metal catalyst, there is described a metal substrate made of Ni, Cu or W, for example.

Similarly, a technology has been reported that a graphene film is formed by the chemical vapor deposition method on a copper layer formed on an Ni or Cu metal foil or an Si substrate. The graphene film is formed at about 1000°C (Non-Patent Literature 1).

[Patent Literature]

[Patent Literature 1] Japanese Unexamined Patent Publication (Kokai) 2009-143799 [Patent Literature]
[Non-Patent Literature 1] SCIENCE Vol. 324 (2009) P1312-1314

Problems to be solved by the Invention

However, it is not easy and spends high costs to produce the monocrystal metal substrate, a wide area substrate is difficult to be provided, and a wide area graphene sheet is thus difficult to be provided, as described in Patent Document 1. On the other hand, Non-Patent Document 1 describes that Cu is used as the substrate. Graphene is not grown on a copper foil in a plane direction within a short time. A Cu layer formed on an Si substrate is annealed to provide coarse grains, thereby providing a substrate. This may because unevenness exists on the copper foil to inhibit graphene from growing. When a Cu layer is formed on the Si substrate, the size of graphene is limited to the size of the Si substrate and the production costs are high. On the other hand, the monocrystal copper foil has less grain boundaries, but undesirably the costs are high and the size is limited.

Specifically, an object of the present invention is to provide a rolled copper foil for producing graphene being capable of producing graphene having a large area with low costs, and a method of producing graphene using the same.

Means for Solving the Problems

A first aspect of the present invention provides a rolled copper foil for producing graphene, wherein a ratio (IC/IA) of a maximum value of a detected intensity (IC) at $\alpha$ = 15 degrees and $\beta$ = 90 degrees $\pm$ 2 degrees and a maximum value of a detected intensity (IA) at $\alpha$ = 70 degrees and $\beta$ = 0 degree $\pm$ 2 degrees is less than 1, and a ratio (ID/IB) of a maximum value of a detected intensity (ID) at $\alpha$ = 15 degrees and $\beta$ = 270 degrees $\pm$ 2 degrees and a maximum value of a detected intensity (IB) at $\alpha$ = 70 degrees and $\beta$ = 180 degrees $\pm$ 2 degrees is less than 1, shown in {111} pole figure.

Preferably, the IA is 1 or more.

Preferably, the IB is 1 or more.

Preferably, The rolled copper foil for producing graphene consists of tough pitch copper in accordance with JIS-H3100, or consists of oxygen free copper in accordance with JIS-H3100 or JIS-H3510, or contains 0.0001% by mass to 0.05% by mass of one or more of elements selected from the group consisting of Sn and Ag to the tough pitch copper or the oxygen free copper.

Preferably, 60 degree gloss of the surface is 130% or more both in a rolling direction and a transversal direction, and a surface roughness Ra is 0.20 μm or less in a rolling direction and a transversal direction.

Further, the present invention provides a method of producing graphene using the rolled copper foil for producing graphene, comprising the steps of:providing a hydrogen gas and a carbon-containing gas while placing the heated rolled copper foil for producing graphene in a predetermined chamber to form graphene on a surface of a copper plated layer of the rolled copper foil for producing graphene; and laminating a transfer sheet on the surface of the graphene, and etching and removing the copper foil for producing graphene while transferring the graphene to the transfer sheet.

Effect of the Invention

According to the present invention, there can be provided a rolled copper foil being capable of producing graphene having a large area with low costs.

Brief Description of Drawing

[Fig. 1] A schematic diagram of {111} pole figure.
[Fig. 2] A process chart showing a method of producing graphene according to an embodiment of the present invention.
[Fig. 3] A graph showing a relationship between an oil film equivalent and a thickness at a final cold rolling when a rolled copper foil for producing graphene is produced.

Description of the Embodiments

Hereinafter, a rolled copper foil for producing graphene according to an embodiment of the present invention will be described. The symbol "%" herein refers to % by mass, unless otherwise specified.

<Composition>

As the rolled copper foil, tough pitch copper (TPC) in accordance with JIS-H3100 (alloy number: C1100) or oxygen free copper (OFC) in accordance with JIS-H3510(alloy number: C1011) or JIS-H3100(alloy number: C1020) can be used. By using the TPC or OFC, the copper foil has a relatively high purity and is likely to have a predetermined crystal orientation as described later.

When the copper foil has a high purity of exceeding 99.999%, the copper foil is softened at normal temperature, has a rolling texture to be controlled with difficulty and is unlikely to have a predetermined crystal orientation as described later.

In addition, to the tough pitch copper or the oxygen free copper, a composition containing 0.050 % by mass or less of one or more of elements selected from the group consisting of Sn and Ag can be used. When the above-described elements are contained, the copper foil can have improved strength and adequate elongation, and the grain size can be increased. If a content percentage of the above-described elements exceeds 0.050% by mass, the strength may be further increased, but the elongation may be decreased to degrade workability and the crystal orientation may be inadequate. More preferably, the content percentage of the above-described elements is 0.04% by mass or less. Further preferably, the content percentage of the above-described elements is 0.03% by mass or less. Most preferably, the content percentage of the above-described elements is 0.02% by mass or less.

Although a lower limit of the content percentage of the above-described elements is not especially limited, the lower limit may be 0.0001 % by mass, for example. If the content percentage of the above-described elements is less than 0.0001 % by mass, the content percentage may be difficult to be controlled. Preferably, the lower limit of the element content percentage is 0.0010% by mass or more, more preferably 0.003% by mass or more, further preferably 0.004% by mass or more, and most preferably 0.005% by mass or more. One or more elements selected from the group consisting of Ag, Sn, Ni, Si, P, Mg, Zr, Cr, Mn, Co, Zn, Ti, B and V may be added so long as the crystal orientation is not significantly affected (for example, 0.05% by mass or less). However, the elements added are not limited thereto.

<Thickness>

The thickness of the copper foil is not especially limited, but is generally 5 to 150 μm. Preferably, the thickness of the copper foil base is 12 to 50 μm for ease of etching and removal as described later while assuring handleability. If the thickness of the copper foil base is less than 12 μm, it may be easily broken and have less handleability. If the

thickness exceeds 50 $\mu$m, etching and removal may be difficult.

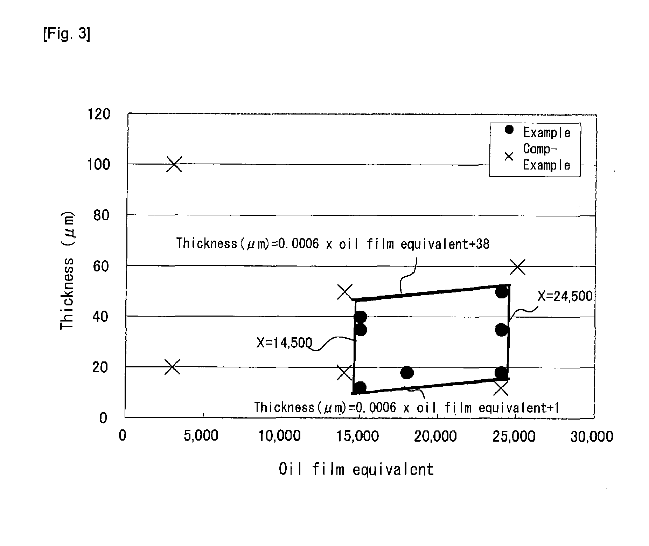

As shown in Fig. 3, there is a certain relationship between the thickness of the copper foil and the oil film equivalent when the copper foil is produced by cold rolling. Note that an oil film equivalent at a final pass of the final cold rolling and an oil film equivalent at a previous pass before the final pass of the final cold rolling against the thickness of the final rolled copper foil should satisfy the following relational expression. Here, each black circle in Fig. 3 represents the relationship between the thickness of the copper foil and the oil film equivalent in Examples described later, and each X represents the relationship between the thickness of the copper foil and the oil film equivalent in Comparative Examples described later. An inside region enclosed of four line segments of a parallelogram in Examples represents an optimum relationship between the thickness of the copper foil and the oil film equivalent for producing the copper foil according to the present invention. Specifically, it satisfies the relational expression: 14500 <= oil film equivalent <= 24500 and 0.0006 x oil film equivalent + 1 <= (thickness of copper foil) <= 0.0006 x oil film equivalent + 38.

When the thickness of the copper foil and the oil film equivalent satisfy the above-described relational expression, the rolled copper foil will have the predetermined crystal orientation as described below.

<{111} pole figure>

The present inventors have reviewed a factor to uniformly grow graphene on the rolled copper foil and have found that controlling the rolling texture is important.

In other words, in the rolled copper foil for producing graphene of the present invention, a ratio (IC/IA) of a maximum value of a detected intensity (IC) at $\alpha$ = 15 degrees and $\beta$ = 90 degrees $\pm$ 2 degrees and a maximum value of a detected intensity (IA) at $\alpha$ = 70 degrees and $\beta$ = 0 degree $\pm$ 2 degrees is less than 1, and a ratio (ID/IB) of a maximum value of a detected intensity (ID) at $\alpha$ = 15 degrees and $\beta$ = 270 degrees $\pm$ 2 degrees and a maximum value of a detected intensity (IB) at $\alpha$ = 70 degrees and $\beta$ = 180 degrees $\pm$ 2 degrees is less than 1, shown in the {111} pole figure.

The (IC/IA) and (ID/IB) are each preferably 0.99 or less, more preferably 0.98 or less, further preferably 0.95 or less, still preferably 0.90 or less, and most preferably 0.85 or less.

The lower limit of the (IC/IA) is not especially limited, but is 0.001 or more, 0.01 or more, 0.05 or more, 0.1 or more or 0.2 or more. Also, the lower limit of the (ID/IB) is not especially limited, but is 0.001 or more, 0.01 or more, 0.05 or more, 0.1 or more or 0.2 or more.

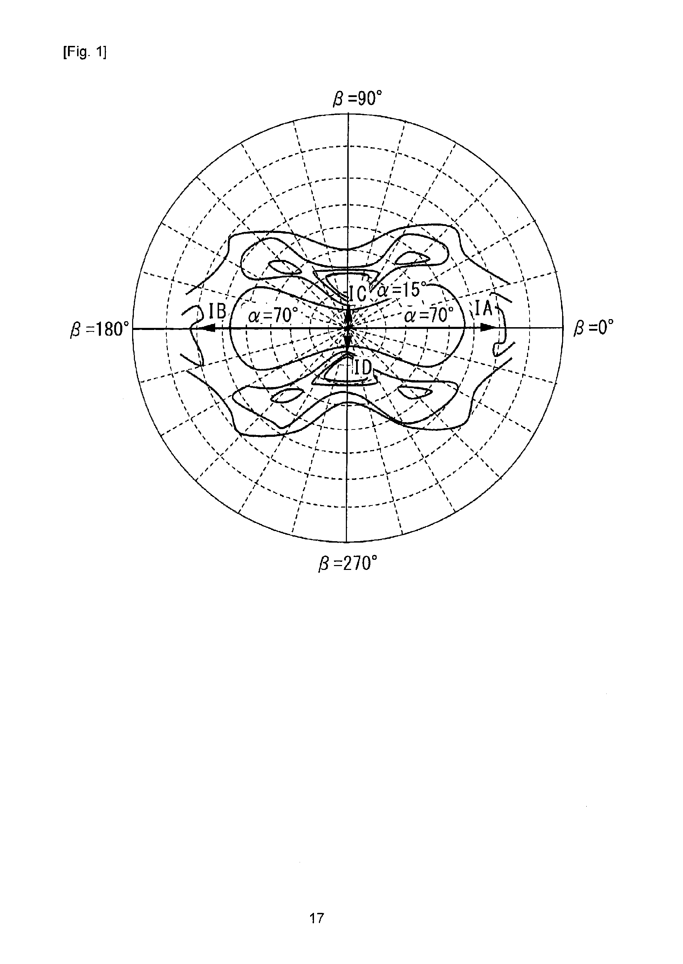

Fig. 1 shows a schematic diagram of {111} pole figure of the rolled copper foil. A (111) texture shows a growth degree of the closest packing orientation. In the {111} pole figure of a typical rolled copper foil, the above-described detected intensities IA and IB tend to have the lowest values and the detected intensities IC and ID tend to have the highest values. It has been found that when a detected intensity(s) in the specific $\alpha$ and $\beta$ in the {111} pole figure are high, it is difficult to grow graphene evenly. It is contemplated that when the detected intensity(s) in the specific $\alpha$ and $\beta$ are high, there is a specific crystal orientation on the copper foil where graphene is inhibited from growing.

In view of the above, in the rolled copper foil for producing graphene according to the present invention, the values of the IC and ID that are generally highest intensities are lower than the values of the IA and IB that are lowest intensities. In this manner, the detected intensity can be close to the uniform value irrespective of $\alpha$ or $\beta$ and does not have a peak at the specific $\alpha$ or $\beta$ and the specific crystal orientation of the copper foil that inhibits graphene from growing can be decreased.

Furthermore, the above-described IA is preferably 1 or more and the above-described IB is preferably 1 or more. In the {111} pole figure of the rolled copper foil, by controlling the values of the IA and IB, which generally have the lowest intensity, to 1 or more, the detected intensity will be closer to a uniform value irrespective of $\alpha$ or $\beta$ and does not have a peak at the specific $\alpha$ or $\beta$. It is thus contemplated that an atomic arrangement on the surface of the copper foil becomes optimum for growing graphene.

The IA is preferably 1.5 to 7.3, more preferably 2.5 to 7.0, further preferably 2.7 to 6.5 and most preferably 2.7 to 6.0. When the value of the IA is within the aforementioned preferable range, graphene tends to have a low sheet resistance.

The IB is preferably 1.5 to 8.0, more preferably 2.0 to 7.9, further preferably 2.5 to 7.8 and most preferably 3.0 to 7.8. When the value of the IB is within the aforementioned preferable range, graphene tends to have a low sheet resistance.

The {111} pole figure is measured for the surface of the copper foil by a reflection method using an X ray diffractometer. If an incident angle of X rays is shallow to a sample surface, it is difficult to measure in the reflection method. In fact, a measurable angle range is 0° <= $\alpha$ <= 75°, 0° <= $\beta$ <= 360° (where $\alpha$: an axis perpendicular to a rotational axis of a diffraction goniometer specified in the Schultz method, $\beta$: an axis parallel to the rotational axis) on the pole figure.

By defining the state having no texture (i.e., the crystal orientation is random) as 1, the intensity of the texture on the pole figure is standardized. By defining the crystal orientation is random, the {111} pole figure of a copper powder sample is measured and is defined as 1.

<60 Degrees Gloss of Copper Foil>

60 degree gloss (JIS Z8741) of the copper foil surface is 130% or more both in a rolling direction and a transversal direction.

As described later, after graphene is produced using the rolled copper foil for producing graphene according to the present invention, the graphene is needed to be transferred from the copper foil to the transfer sheet. It is found that when a surface of the copper foil is rough, it is difficult to transfer the graphene, and the graphene is broken. It is preferable that the surface irregularity of the copper foil is smooth.

An upper limit of the 60 degree gloss in a rolling direction or a transversal direction is not especially limited. When it is less than 500%, the production conditions such as rolling reduction ratio may not strictly specified upon the production of the copper foil substrate, which is preferable in that degree of freedom in the production is high. Practically, the upper limit of the 60 degree gloss in a rolling direction and a transversal direction is about 800%.

In addition, in order to ease the transfer of the graphene to the transfer sheet, the surface of the copper foil in the rolling direction has an arithmetic mean roughness Ra of preferably 0.20 $\mu$m or less.

Using the rolled copper foil for producing graphene as specified above, the large-area graphene can be produced at low costs and a high yield.

<Production of Rolled Copper Foil for producing Graphene>

The rolled copper foil for producing graphene according to the embodiment of the present invention can be produced as follows, for example: Firstly, a copper ingot having a predetermined composition is produced, is hot rolled and cold rolled, and is then annealed and cold rolled repeatedly to provide a rolled sheet. The rolled sheet is annealed to be re-crystallized, and finally cold rolled to the predetermined thickness, thereby providing a copper foil substrate.

Here, in the final cold rolling, the oil film equivalent at the final pass and the oil film equivalent at the previous pass before the final pass satisfy the above-described relationship against the thickness of the final rolled copper foil (see Fig. 3). Note that the oil film equivalent at the final pass and the oil film equivalent at the previous pass before the final pass not necessarily have the same value. In general, the rolled copper foil is worked at high speed under oil lubrication. As a lubricant oil film is thicker, a shear band deformation is likely to be dominant. As the thickness of the copper foil is thicker, a deformation rate of the copper foil tends to be increased upon rolling. It is contemplated that the crystal orientation of the copper foil is within the predetermined range from the effect of the shear band existence and the deformation rate of the copper foil upon rolling.

When the rolled copper foil has the predetermined crystal orientation, it is contemplated that graphene growth is promoted on the surface of the rolled copper foil.

The oil film equivalent is represented by the following equation:

$$\text{Oil film equivalent} = \{(\text{rolling oil viscosity, kinetic viscosity at } 40^\circ\text{C [cSt]}) \times (\text{rolling speed [mpm]} + \text{roll circumferential speed [mpm]})\}/\{(\text{roll angle of bite [rad]}) \times (\text{yield stress of material [kg/mm}^2\text{]})\}.$$

In order to lower the oil film equivalent, known methods may be used, e.g., rolling oil having low viscosity is used, or the rolling speed is decreased.

<Method of producing Graphene>

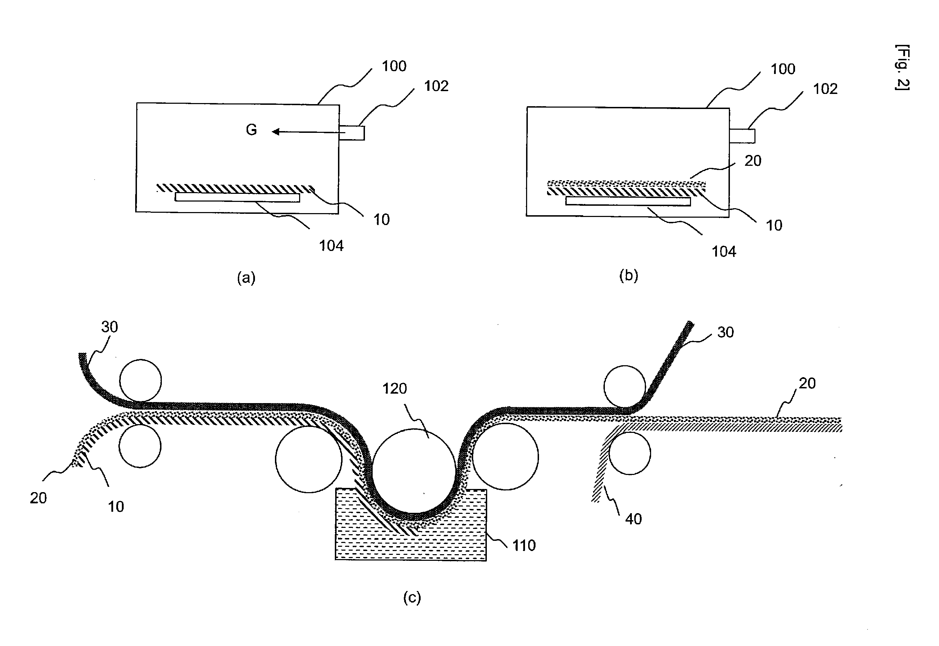

Next, referring to Fig. 2, a method of producing graphene according to the embodiment of the present invention will be described.

First, the above-described rolled copper foil 10 for producing graphene of the present invention is placed in a chamber (such as a vacuum chamber) 100 and is heated by a heater 104. At the same time, the pressure in the chamber 100 is reduced or the chamber 100 is vacuum-evacuated. Then, a carbon-containing gas G and a hydrogen gas are fed to the chamber 100 through a gas supply inlet 102 (Fig. 2(a)). As the carbon-containing gas G, carbon monoxide, methane, ethane, propane, ethylene, acetylene or the like is cited, but is not limited thereto. One or more of these gases may be mixed. The rolled copper foil 10 for producing graphene may be heated at a decomposition temperature of the carbon-containing gas G or more. For example, the temperature can be 1000°C or more. Alternatively, the carbon-containing gas G may be heated at the decomposition temperature or more within the chamber 100, and the decomposed gas may bring into contact with the rolled copper foil 10 for producing graphene. In this time, by heating the rolled copper foil 10 for producing graphene, the decomposition gas (carbon gas) is contacted to form graphene 20 on the surface of the rolled copper foil 10 for producing graphene (Fig. 2(b)).

Then, the rolled copper foil 10 for producing graphene is cooled to normal temperature, a transfer sheet 30 is laminated on the surface of the graphene 20, and the graphene 20 is transferred to the transfer sheet 30. Next, the laminate is continuously immersed into an etching tank 110 via a sink roll 120, and the rolled copper foil 10 for producing graphene is removed by etching (Fig. 2 (c)). In this way, the graphene 20 laminated on the predetermined transfer sheet 30 can be produced.

In addition, the laminate from which the rolled copper foil 10 for producing graphene is removed is pulled up, and a substrate 40 is laminated on the graphene 20. While the graphene 20 is transferred to the substrate 40, the transfer sheet 30 is removed, whereby the graphene 20 laminated on the substrate 40 can be produced.

As the transfer sheet 30, a variety of resin sheets (a polymer sheet such as polyethylene, polyurethane etc.) can be used. As an etching liquid for etching and removing the rolled copper foil 10 for producing graphene, a sulfuric acid solution, a sodium persulfate solution, a hydrogen peroxide and sodium persulfate solution, or a solution where sulfuric acid is added to hydrogen peroxide can be, for example, used. As the substrate 40, an Si, SiC, Ni or Ni alloy can be, for example, used.

[Example]

<Preparation of Sample>

Each cooper ingot having a composition shown in Table 1 was prepared, was hot rolled, was cold rolled, and was annealed in an annealing furnace set at the temperature of 300 to 800°C and cold rolled repeatedly to provide a rolled sheet having a thickness of 1 to 2 mm. The rolled sheet was annealed and re-crystallized in the annealing furnace set at the temperature of 300 to 800°C, and was finally cold rolled to a thickness shown in Table 1 to provide a copper foil.

Here, the oil film equivalents were adjusted to the values shown in Table 1 both at a final pass of the final cold rolling and a previous pass before the final pass of the final cold rolling.

The oil film equivalent is represented by the following equation:

$$\text{(Oil film equivalent amount)} = \{\text{(rolling oil viscosity, kinetic viscosity at 40°C, cSt)} \times \text{(rolling speed; m/min)}\}/\{\text{(yield stress of material; kg/mm}^2) \times \text{(roll angle of bite; rad)}\}$$

<Measurement of 60 Degree Gross>

The 60 degree gross of each copper foil surface after the final cold rolling in Examples and Comparative Examples was measured. The 60 degree gross were measured using a gloss meter in accordance with JIS-Z8741 (trade name "PG-1M" manufactured by Nippon Denshoku Industries Co., Ltd.) In Table, $G60_{RD}$ and $G60_{TD}$ represent 60 degree gloss in a rolling direction and a transversal direction, respectively.

<Measurement of Surface Roughness Ra>

The surface roughness Ra of each copper foil in Examples and Comparative Examples after the final cold rolling was measured.

The surface roughness Ra was measured as an arithmetic mean roughness (Ra; $\mu$m) in accordance with JIS-B0601 using a contact roughness meter (trade name "SE-3400" manufactured by Kosaka Laboratory Ltd.). Under the conditions of a measurement sampling length of 0.8 mm, an evaluation length of 4 mm, a cut off value of 0.8 mm and a feed rate of 0.1 mm/sec, ten measurements were done in parallel with a rolling direction at different measurement positions, and values for ten measurements were averaged.

<{111} pole figure measurement >

The {111} pole figure was measured for the surface of each copper foil in Examples and Comparative Examples after the final cold rolling by a reflection method using an X ray diffractometer (RINT 2500 manufactured by Rigaku Corporation). If an incident angle of X rays is shallow to a sample surface, it is difficult to measure in the reflection method. In fact, a measurable angle range is $0° <= \alpha <= 75°$, $0° <= \beta <= 360°$ (where $\alpha$: an axis perpendicular to a rotational axis of a diffraction goniometer specified in the Schultz method, $\beta$: an axis parallel to the rotational axis) on the pole figure.

By defining the state having no texture (i.e., the crystal orientation is random) as 1, the intensity of the texture on the pole figure was standardized. By defining the crystal orientation was random, the {111} pole figure of a copper powder sample was measured and was defined as 1.

As the X-ray irradiation conditions, a Cu tube was used, a tube voltage was 40 kV and a tube current was 100 mA. By the Schultz reflection method, the {111} pole figure was measured.

<Production of Graphene>

The rolled copper foil for producing graphene (horizontal and vertical 100 x 100 mm) in each Example was placed in a vacuum chamber, and heated at 1000°C. Under vacuum (pressure: 0.2 Torr), hydrogen gas and methane gas were fed into the vacuum chamber (fed gas flow rate: 10 to 100 cc/min), the copper foil was heated to 1000°C for 30 minutes and held for 1 hour to grow graphene on the surface of the copper foil.

In each Example, graphene was tried to be produced ten times under the above-described conditions, a sheet resistance of graphene was measured and a manufacturing yield of graphene was evaluated.

The resistance value (sheet resistance: $\Omega$/sq) of graphene was measured by a four terminal method after transferring graphene on the surface of the copper foil in the above-described ten samples to a PET film and the average value was determined. When the resistance value of graphene is 600 $\Omega$/sq or less, there is no practical problem.

The manufacturing yield of graphene was evaluated by observing graphene on the surface of the copper foil in the above-described ten samples by the atomic force microscope (AFM). When scale-like irregularities were observed on the whole surface by the AFM, graphene might be produced. Based on the number of times of the graphene production when graphene was tried to be produced ten times, a yield was evaluated by the following rating: The rating "Good" may not have practical problems.

Good: Graphene was produced four times or more, when graphene was tried to be produced ten times

Bad: Graphene was produced three times or less, when graphene was tried to be produced ten times

Table 1 shows the obtained result.

[Table 1]

| | Composition (wt.ppm) | Oil film equivalent at final cold rolling | | Thickness of coper foil (μm) | Properties after final rolling | | | | Detection intensity of {111} pole figure | | | | | | Graphene sheet resistance (Ω/sq) | Graphene yield | (Oil film equivalent) /thickness |
| | | | | | Gloss | | Surface roughness (μm) | | | | | | | | | | |
| | | Previous pass before final pass | Final pass | | $G60_{RD}$ | $G60_{TD}$ | RD | TD | IA | IB | IC | ID | IC/IA | ID/IB | | | |
| Example 1 | TPC | 24,000 | 24,000 | 18 | 164 | 169 | 0.154 | 0.165 | 2.3 | 2.6 | 1.7 | 1.7 | 0.74 | 0.65 | 530 | Good | 1,333 |
| Example 2 | TPC | 24,000 | 24,000 | 35 | 168 | 186 | 0.141 | 0.159 | 2.5 | 2.6 | 1.7 | 1.7 | 0.68 | 0.65 | 520 | Good | 686 |
| Example 3 | TPC+Ag190 | 18,000 | 18,000 | 18 | 390 | 373 | 0.112 | 0.113 | 2.6 | 2.5 | 1.8 | 1.9 | 0.69 | 0.76 | 490 | Good | 1,000 |
| Example 4 | TPC+Ag190 | 24,000 | 24,000 | 35 | 140 | 151 | 0.148 | 0.147 | 7.4 | 8.1 | 6.9 | 6.8 | 0.93 | 0.84 | 550 | Good | 686 |
| Example 5 | TPC+Ag190 | 15,000 | 15,000 | 35 | 589 | 579 | 0.034 | 0.041 | 8.2 | 7.6 | 5.6 | 5.9 | 0.68 | 0.78 | 450 | Good | 429 |
| Example 6 | TPC+Ag190 | 15,000 | 15,000 | 40 | 561 | 564 | 0.042 | 0.044 | 9.6 | 9.3 | 6.0 | 6.1 | 0.63 | 0.66 | 480 | Good | 375 |
| Example 7 | TPC+Ag100 | 15,000 | 15,000 | 35 | 573 | 579 | 0.037 | 0.040 | 8.1 | 7.5 | 5.5 | 5.8 | 0.68 | 0.77 | 470 | Good | 429 |
| Example 8 | TPC+Ag300 | 15,000 | 15,000 | 35 | 580 | 588 | 0.034 | 0.038 | 9.7 | 9.2 | 6.8 | 6.6 | 0.70 | 0.72 | 480 | Good | 429 |
| Example 9 | OFC | 15,000 | 15,000 | 35 | 560 | 555 | 0.029 | 0.032 | 3.3 | 3.8 | 2.2 | 2.3 | 0.67 | 0.61 | 500 | Good | 429 |
| Example 10 | OFC+Ag50 | 24,000 | 24,000 | 50 | 562 | 567 | 0.041 | 0.045 | 5.1 | 4.7 | 3.5 | 3.4 | 0.69 | 0.72 | 470 | Good | 480 |
| Example 11 | OFC+Ag100 | 15.000 | 15,000 | 35 | 562 | 567 | 0.041 | 0.045 | 5.1 | 4.7 | 3.5 | 3.4 | 0.69 | 0.72 | 470 | Good | 429 |
| Example 12 | OFC+Ag190 | 15,000 | 15,000 | 35 | 559 | 565 | 0.044 | 0.047 | 3.4 | 3.5 | 2.8 | 2.6 | 0.82 | 0.74 | 480 | Good | 429 |
| Example 13 | OFC+Ag190 | 14,500 | 14,500 | 46 | 588 | 576 | 0.027 | 0.025 | 2.9 | 3.2 | 1.0 | 0.9 | 0.34 | 0.28 | 420 | Good | 315 |
| Example 14 | OFC+Ag300 | 15,000 | 15,000 | 35 | 567 | 571 | 0.040 | 0.043 | 3.4 | 3.7 | 3.1 | 3.0 | 0.91 | 0.81 | 490 | Good | 429 |
| Example 15 | TPC | 15,000 | 15,000 | 12 | 602 | 611 | 0.039 | 0.037 | 2.4 | 2.0 | 2.2 | 1.9 | 0.92 | 0.95 | 570 | Good | 1,250 |
| Example 16 | TPC+Ag190 | 15,000 | 15,000 | 12 | 610 | 618 | 0.038 | 0.035 | 1.9 | 1.8 | 1.8 | 1.7 | 0.95 | 0.94 | 580 | Good | 1,250 |
| Comp-Example 1 | TPC | 3,000 | 3,000 | 20 | 464 | 641 | 0.027 | 0.150 | 0.6 | 0.6 | 2.0 | 2.0 | 3.33 | 3.33 | 1200 | Bad | 150 |
| Comp-Example 2 | TPC | 3,000 | 3,000 | 100 | 559 | 515 | 0.031 | 0.155 | 2.7 | 2.4 | 2.7 | 2.4 | 1.00 | 1.00 | 900 | Bad | 30 |

EP 2 873 744 A1

8

| | Composition (wt.ppm) | Oil film equivalent at final cold rolling | | Thickness of coper foil ($\mu$m) | Properties after final rolling | | | | Detection intensity of {111} pole figure | | | | | | Graphene sheet resistance ($\Omega$/sq) | Graphene yield | (Oil film equivalent) /thickness |
|---|---|---|---|---|---|---|---|---|---|---|---|---|---|---|---|---|---|
| | | | | | Gloss | | Surface roughness ($\mu$m) | | | | | | | | | | |
| | | Previous pass before final pass | Final pass | | G60$_{RD}$ | G60$_{TD}$ | RD | TD | IA | IB | IC | ID | IC/IA | ID/IB | | | |
| Comp-Example 3 | TPC | 14,000 | 14,000 | 18 | 162 | 169 | 0.160 | 0.154 | 3.5 | 3.1 | 3.8 | 3.6 | 1.09 | 1.16 | 910 | Bad | 778 |
| Comp-Example 4 | TPC | 14,000 | 14,000 | 50 | 181 | 186 | 0.144 | 0.141 | 3.6 | 3.2 | 3.7 | 3.8 | 1.03 | 1.19 | 880 | Bad | 280 |
| Comp-Example 5 | TPC | 24,000 | 24,000 | 12 | 123 | 128 | 0.193 | 0.202 | 3.2 | 2.8 | 3.4 | 3.2 | 1.06 | 1.14 | 1100 | Bad | 2,000 |
| Comp-Example 6 | TPC | 25,000 | 25,000 | 60 | 148 | 152 | 0.171 | 0.198 | 4.1 | 3.8 | 4.5 | 4.2 | 1.10 | 1.11 | 1100 | Bad | 417 |
| Comp-Example 7 | TPC+Ag190 | 24,000 | 24,000 | 12 | 121 | 125 | 0.184 | 0.191 | 3.8 | 3.7 | 4.0 | 4.6 | 1.05 | 1.24 | 1100 | Bad | 2,000 |
| Comp-Example 8 | OFC | 24,000 | 24,000 | 12 | 128 | 129 | 0.180 | 0.192 | 3.0 | 2.9 | 3.0 | 3.2 | 1.00 | 1.10 | 960 | Bad | 2,000 |

As apparent from Table 1, in each of Examples where the (IC/IA) and (ID/IB) were less than 1, the sheet resistance of graphene was low and the manufacturing yield of graphene was excellent. In addition, in each of Examples, the detection intensities IA and IB were 1 or more.

On the other hand, in each of Comparative Examples where the oil film equivalent and the thickness at the final cold rolling were outside of the range in the above-described relational expression, the (IC/IA) and (ID/IB) was 1 or more, the sheet resistance of graphene was high and the manufacturing yield of graphene was poor.

In Comparative Example 1, the IA and IB were less than 1. The reason is unclear, but it is presumed that the oil film equivalent is extremely low and the thickness of the copper foil is relatively thin, so that the crystal orientation that inhibits the growth of graphene is significantly grown.

Explanation of Reference Numerals

10     rolled copper foil for producing graphene
20     graphene
30     transfer sheet

**Claims**

1. A rolled copper foil for producing graphene, wherein a ratio (IC/IA) of a maximum value of a detected intensity (IC) at $\alpha$ = 15 degrees and $\beta$ = 90 degrees $\pm$ 2 degrees and a maximum value of a detected intensity (IA) at $\alpha$ = 70 degrees any $\beta$ =0 degree $\pm$ 2 degrees is less than 1, and a ratio (ID/IB) of a maximum value of a detected intensity (ID) at $\alpha$ = 15 degrees and $\beta$ = 270 degrees $\pm$ 2 degrees and a maximum value of a detected intensity (IB) at $\alpha$ = 70 degrees and $\beta$ = 180 degrees $\pm$ 2 degrees is less than 1, shown in {111} pole figure.

2. The rolled copper foil for producing graphene according to Claim 1, wherein the IA is 1 or more.

3. The rolled copper foil for producing graphene according to Claim 1 or 2, wherein the IB is 1 or more.

4. The rolled copper foil for producing graphene according to any one of Claim 1 or 3, consisting of tough pitch copper in accordance with JIS-H3100, or consisting of oxygen free copper in accordance with JIS-H3100 or JIS-H3510, or containing 0.0001% by mass to 0.05% by mass of one or more of elements selected from the group consisting of Sn and Ag to the tough pitch copper or the oxygen free copper.

5. The rolled copper foil for producing graphene according to any one of Claim 1 to 4, wherein 60 degree gloss of the surface is 130% or more both in a rolling direction and a transversal direction, and a surface roughness Ra is 0.20 $\mu$m or less in a rolling direction and a transversal direction.

6. A method of producing graphene using the rolled copper foil for producing graphene according to any of Claims 1 to 5, comprising the steps of:

   providing a hydrogen gas and a carbon-containing gas while placing the heated rolled copper foil for producing graphene in a predetermined chamber to form graphene on a surface of a copper plated layer of the rolled copper foil for producing graphene; and
   laminating a transfer sheet on the surface of the graphene, and etching and removing the rolled copper foil for producing graphene while transferring the graphene to the transfer sheet.

[Fig. 1]

17

[Fig. 2]

[Fig. 3]

## INTERNATIONAL SEARCH REPORT

International application No.

PCT/JP2013/068636

A.   CLASSIFICATION OF SUBJECT MATTER

*C22C9/02*(2006.01)i, *C01B31/02*(2006.01)i, *C22C9/00*(2006.01)i, *C22C9/01* (2006.01)i, *H01B13/00*(2006.01)i, *C22C9/04*(2006.01)n, *C22C9/05*(2006.01)n, *C22C9/06*(2006.01)n, *C22C9/10*(2006.01)n, *H01M8/02*(2006.01)n

According to International Patent Classification (IPC) or to both national classification and IPC

B.   FIELDS SEARCHED

Minimum documentation searched (classification system followed by classification symbols)
C22C9/02, C01B31/02, C22C9/00, C22C9/01, H01B13/00, C22C9/04, C22C9/05, C22C9/06, C22C9/10, H01M8/02

Documentation searched other than minimum documentation to the extent that such documents are included in the fields searched

Jitsuyo Shinan Koho          1922–1996     Jitsuyo Shinan Toroku Koho     1996–2013
Kokai Jitsuyo Shinan Koho    1971–2013     Toroku Jitsuyo Shinan Koho     1994–2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| P,X | WO 2012/111840 A1   (JX Nippon Mining & Metals Corp.), 23 August 2012 (23.08.2012), paragraphs [0021], [0022]; examples 1 to 7, 13, 14(table 1) & JP 2012-183583 A      & JP 2012-183581 A | 1-6 |
| P,X | WO 2013/065601 A1   (JX Nippon Mining & Metals Corp.), 10 May 2013 (10.05.2013), paragraph [0026]; examples 1 to 21(table 1) (Family: none) | 1-6 |

☒   Further documents are listed in the continuation of Box C.          ☐   See patent family annex.

| | |
|---|---|
| * Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 19 August, 2013 (19.08.13) | 27 August, 2013 (27.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/068636

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-227971 A  (Nippon Mining & Metals Co., Ltd.), 14 October 2010 (14.10.2010), paragraphs [0012], [0013], [0021], [0023], [0024]; table 1 (Family: none) | 1-6 |

Form PCT/ISA/210 (continuation of second sheet) (July 2009)

**REFERENCES CITED IN THE DESCRIPTION**

**Patent documents cited in the description**

- JP 2009143799 A

**Non-patent literature cited in the description**

- *SCIENCE,* 2009, vol. 324, 1312-1314